# DEMANDE DE BREVET EUROPEEN

(11) **EP 1 564 071 A2**
(43) Date de publication de la demande: **17.08.2005**
(21) Numéro de dépôt: 05290256.6
(22) Date de dépôt: 04.02.2005
(51) Int. Cl.: B60Q 1/12

(54) **Procédé de commande des faisceaux lumineux émis par un dispositif d'éclairage d'un véhicule**

(30) Priorité: 12.02.2004 FR 0401394
(71) Demandeur: VALEO VISION, 93012 Bobigny Cédex (FR)
(72) Inventeur: Godbillon, Vincent, 75011 Paris (FR); Leleve, Joel, 93800 Epinay Sur Seine (FR)

(57) **Abrégé**

L'invention concerne un procédé de commande des faisceaux lumineux projetés par un dispositif d'éclairage (4) d'un véhicule sur une route (R), en fonction de la géométrie de cette route (R). Selon l'invention, il comporte les étapes suivantes :
- acquisition de données représentatives d'au moins un paramètre de conduite ;
- analyse desdites données afin de déterminer un mode de conduite associé à un comportement du conducteur du véhicule ; et
- choix d'une loi de commande des faisceaux lumineux (4A,4B) en fonction du mode de conduite déterminé.

## Description

L'invention concerne un procédé de commande des faisceaux lumineux projetés par un dispositif d'éclairage d'un véhicule, sur une route, en fonction de la géométrie de cette route.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules.

Compte tenu du nombre important de véhicules circulant sur les routes, il est nécessaire de procurer à ces véhicules un éclairage le mieux adapté possible, d'une part, à la route sur laquelle ils circulent et, d'autre part, à leurs conditions de circulation. En particulier, la nuit ou par mauvais temps (brouillard, pluie, etc...), il est important que le conducteur puisse avoir une vision optimale de la route qui s'étend devant lui et des bas côtés de cette route. Autrement dit, pour des questions de sécurité, on cherche à améliorer l'éclairage de la scène située devant le véhicule et ainsi à améliorer la vision de cette scène par le conducteur d'un véhicule.

Classiquement, il existe sur les véhicules automobiles, deux types d'éclairage : un éclairage dit « de route » qui éclaire la route intégralement sur une longue distance et un éclairage de croisement qui éclaire la route sur une courte distance pour éviter d'éblouir les conducteurs des véhicules venant en sens opposé. L'éclairage de route est réalisé au moyen de projecteurs de route qui envoient chacun un faisceau lumineux dirigé vers l'horizon. L'éclairage de croisement est réalisé au moyen de projecteurs de croisement, ou codes, qui envoient chacun une nappe de lumière descendante donnant une visibilité sur une distance de l'ordre de 60 à 80 mètres.

Pour améliorer cet éclairage, on cherche à orienter la lumière émise par les projecteurs en fonction de la géométrie de la route. Autrement dit, on cherche à ce que les projecteurs « suivent » la route, c'est-à-dire qu'ils éclairent droit devant le véhicule, lorsque la route est rectiligne et qu'ils éclairent à l'avant du véhicule, sur la droite ou sur la gauche, lorsque la route forme un virage, respectivement, à droite ou à gauche.

Des dispositifs d'éclairage destinés à suivre la route sont déjà connus, on désigne usuellement cette nouvelle fonctionnalité par le terme anglo-saxon de « Bending Light ». On connaît ainsi la fonction dite « FBL » pour Fixed Bending Light, consistant à « ajouter » un faisceau lumineux du coté où tourne le virage, comme cela est par exemple décrit dans le brevet EP 864 462, et la fonction dite « DBL » pour Dynamic Bending Light, où un faisceau lumineux va tourner du côté où tourne le virage, afin de le suivre. Généralement, ces dispositifs, FBL ou DBL, utilisent des informations disponibles sur le véhicule pour déterminer la géométrie de la route. Certains de ces dispositifs intègrent un capteur d'angle au volant qui fournit des informations sur la trajectoire suivie par le véhicule.

Un autre dispositif d'éclairage connu utilise une information interne au véhicule permettant une certaine anticipation. Par exemple, juste avant la sortie d'un virage, bien que le volant soit toujours à l'angle correspondant à la courbe, il est courant que le conducteur accélère car il est en vue de la sortie du virage et d'une partie de route plus rectiligne que celle qu'il vient de passer. Un tel dispositif utilise cette concordance d'événements pour commencer à rabattre les faisceaux lumineux vers leur position centrale.

Certains autres dispositifs d'éclairage connus utilisent des informations issues d'un système de navigation. Ce système de navigation associe les informations fournies par une cartographie avec les indications données par le GPS du véhicule. Un tel système de navigation permet de connaître à l'avance la géométrie de la route. Par exemple, il est possible de connaître à l'avance les virages qui vont apparaître sur la route, à une distance donnée. Il est donc possible, en se fiant aux informations fournies par le système de navigation, de pré orienter les faisceaux lumineux du véhicule et ainsi d'anticiper l'éclairage de la route. De tels dispositifs sont décrits notamment dans les documents EP 780 823 et EP 887 229.

Tous ces procédés de commande des faisceaux lumineux projetés par un dispositif d'éclairage d'un véhicule posent le problème suivant.

Ils présentent une loi unique de commande quel que soit le conducteur. Or il est constaté des différences notoires dans la manière d'aborder un virage selon la personne au volant. Par exemple, on constate une différence selon que le conducteur sera débutant ou confirmé ou selon que le conducteur conduira de façon calme ou sportive. Entre autre, un conducteur confirmé utilise la corde du virage plus tôt qu'un conducteur débutant ou de comportement modéré. Ces différences conduisent à un besoin différent quant à l'endroit sur la route où doit être apportée la lumière dans un virage.

L'invention résout ce problème en proposant un procédé de commande d'au moins un des faisceaux lumineux émis par un dispositif d'éclairage d'un véhicule, permettant de satisfaire les différents conducteurs, en diversifiant la loi de commande en fonction de la personne au volant.

Pour ce faire, l'invention propose un procédé de commande d'au moins un faisceau lumineux émis par un dispositif d'éclairage d'un véhicule sur une route, en fonction de la géométrie de cette route, caractérisé en ce qu'il comporte les étapes suivantes :
- acquisition de données représentatives d'au moins un paramètre de conduite ;
- analyse desdites données afin de déterminer un mode de conduite associé à un comportement du conducteur du véhicule ; et
- choix d'une loi de commande des faisceaux lumineux en fonction du mode de conduite déterminé.

Selon un mode de réalisation préféré de l'invention, l'étape d'analyse est déclenchée automatiquement au démarrage du véhicule.

Ledit paramètre de conduite peut être choisi parmi au moins un des paramètres suivants : un paramètre de la boîte de vitesses du véhicule, et/ou un paramètre du déplacement de la pédale d'accélération, et/ou un paramètre du déplacement de la pédale de freinage du véhicule. On peut aussi choisir le paramètre du déplacement de la pédale d'embrayage.

Le dit paramètre de la boîte de vitesses est le changement de rapport de vitesse et/ou le temps mis pour ces changements.

Ledit paramètre du déplacement de la pédale d'accélération ou de freinage (ou d'embrayage) du véhicule peut être la valeur d'enfoncement de cette pédale et/ou est la vitesse d'enfoncement de cette pédale

La commande du dispositif d'éclairage peut être une orientation des faisceaux lumineux et/ou un allumage d'un faisceau spécifique et/ou une modification de l'intensité d'un faisceau.

L'invention concerne également un système de commande des faisceaux lumineux émis par un dispositif d'éclairage d'un véhicule circulant sur une route, en fonction de la géométrie de cette route, pour la mise en oeuvre du procédé brièvement décrit ci-dessus, caractérisé en ce qu'il comporte :
- un dispositif d'acquisition de données représentatives d'au moins un paramètre de conduite,
- un calculateur d'analyse desdites données représentatives dudit au moins un paramètre de conduite,
- un dispositif de comparaison dudit au moins un paramètre de conduite avec des paramètres prédéfinis déterminant des modes de conduite afin de déterminer un mode de conduite associé à un comportement du conducteur du véhicule, et
- un dispositif de commande des faisceaux lumineux selon une loi de commande des faisceaux lumineux en fonction du mode de conduite déterminé.

Lesdits dispositif d'acquisition et calculateur d'analyse peuvent être liés à la boîte de vitesses du véhicule et/ou à un capteur sur la pédale d'accélération, de freinage (ou d'embrayage) du véhicule.

Lesdits dispositif d'acquisition et calculateur d'analyse, ainsi que ledit dispositif de comparaison, peuvent être intégrés à la boîte de vitesses automatique du véhicule.

L'invention concerne enfin un dispositif d'éclairage de véhicule automobile utilisant un tel système de commande et un véhicule automobile équipé d'au moins un tel dispositif d'éclairage.

L'invention est décrite ci-après à l'aide de figures ne représentant qu'un mode de réalisation préféré de l'invention.
La figure 1 est une vue de dessus des trajectoires classiques prises dans un virage par un conducteur débutant et un conducteur confirmé.
La figure 2 est une représentation d'un système de commande des faisceaux lumineux émis par un dispositif d'éclairage d'un véhicule circulant sur une route, selon un mode de réalisation de l'invention.
La figure 3 est une vue de dessus de la commande des faisceaux lumineux émis par un dispositif d'éclairage d'un véhicule circulant sur une route, lors d'un virage pris par un conducteur débutant et un conducteur confirmé.

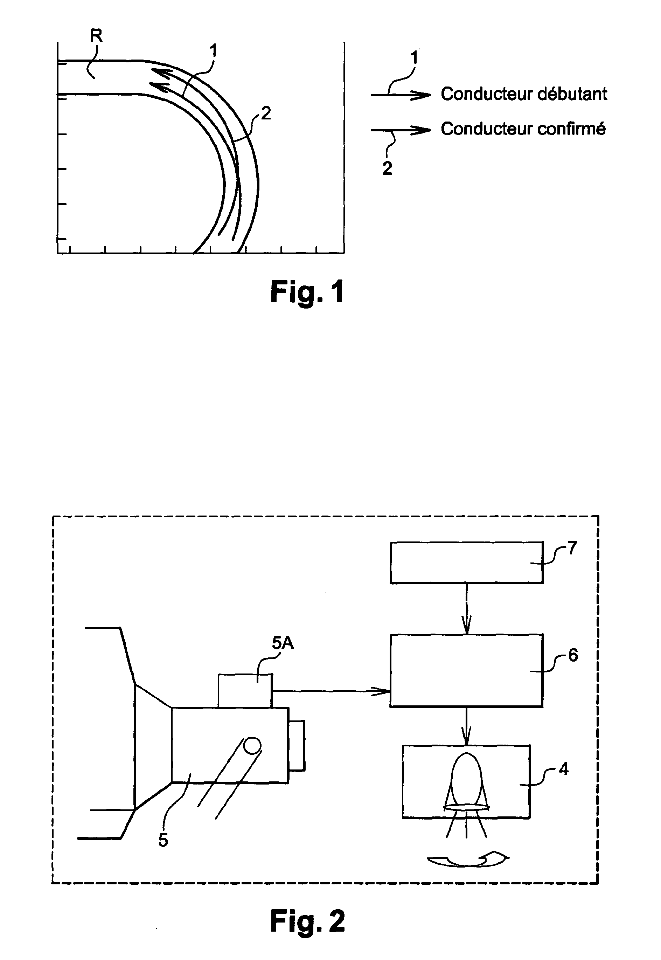

La figure 1 illustre une constatation de différence notoire dans la manière d'aborder un virage selon la personne au volant.

Un conducteur confirmé, dont la trajectoire sur la route R est représentée par la flèche 2, utilise la corde du virage plus tôt qu'un conducteur débutant ou de comportement modéré, dont la trajectoire est représentée par la flèche 1.

Il apparaît donc qu'une loi de commande unique des faisceaux lumineux projetés par un dispositif d'éclairage d'un véhicule, dépendante uniquement du véhicule, par exemple grâce à un dispositif d'éclairage de type « Bending Light » intégrant un capteur d'angle au volant fournissant des informations sur la trajectoire suivie par le véhicule, n'est pas satisfaisante dans les deux cas de mode de conduite.

Selon un mode de réalisation de l'invention représenté sur la figure 2, un système de commande des faisceaux lumineux émis par un dispositif d'éclairage 4 d'un véhicule circulant sur une route, en fonction de la géométrie de cette route, comporte :
- un calculateur d'analyse 5A d'au moins un paramètre de conduite intégré à une boîte de vitesses automatique 5 du véhicule,
- un dispositif de comparaison 5A de ce paramètre avec des paramètres prédéfinis déterminant un mode de conduite et qui est également intégré à une boîte de vitesses automatique 5 du véhicule,
- un dispositif de commande 6 des faisceaux lumineux selon une loi de commande des faisceaux lumineux en fonction de ce mode de conduite.

Avantageusement, la boîte de vitesses 5 est, dans cet exemple non limitatif, automatique et du type comportant un calculateur dit de conduite intégré analysant l'utilisation faite de la boîte de vitesses dont les rapports de vitesse et leur changement sont fonction d'une analyse des variations du régime moteur et de l'utilisation des freins. Son calculateur 5A assure alors l'analyse de ces paramètres de conduite et la détermination d'un mode de conduite dans une des trois catégories prédéfinies : conduite calme, conduite normale, conduite nerveuse. Cette détermination est effectuée en quelques secondes de roulement du véhicule. Utiliser une boite automatique est intéressant, car elle contient alors déjà les moyens d'analyse, le système de calcul permettant de mettre en oeuvre l'invention.

En sortie de ce calculateur, l'information « mode de conduite » est transmise à un dispositif de commande 6 des faisceaux lumineux selon une loi de commande des faisceaux lumineux en fonction de ce mode de conduite. La loi de commande du système d'éclairage 4 est donc adaptée au mode de conduite. Lois de commande et modes de conduite peuvent être classifiées de la même façon : calme, normale, nerveuse ou de façon différente. Les lois de commande peuvent par exemple comprendre deux classes : conducteur débutant et conducteur confirmé.

Selon cet exemple représenté, ce dispositif de commande est de type « Bending Light » intégrant un capteur 7 d'angle au volant fournissant des informations sur la trajectoire suivie par le véhicule.

En quelques secondes de roulement du véhicule, au démarrage, la loi de commande des faisceaux lumineux est fixée en fonction du conducteur. Est représenté ici plus précisément un projecteur 4 produisant un faisceau pivotant. La rotation de ce faisceau est accentuée dans le cas d'un conducteur confirmé. En effet, ce dernier présente une anticipation de la route plus importante et son regard porte plus loin que celui d'un conducteur débutant.

Ce type de projecteur est un exemple d'application de l'invention. On peut noter que l'on peut aussi prévoir, dans le cadre de l'invention, que le système de commande puisse mémoriser, au moins temporairement, l'information concernant le mode de conduite, même une fois le véhicule arrêté et le moteur coupé.

L'éclairage suivant l'orientation de la route peut également être réalisé par allumage d'un faisceau spécifique du projecteur (du tyep FBL) et/ou une modification d'intensité du faisceau déjà allumé : on peut modifier l'aliumentation électrique de la lampe émettant le faisceau lumineux considéré, par exemple, pour modifier l'intensité de son flux lumineux.

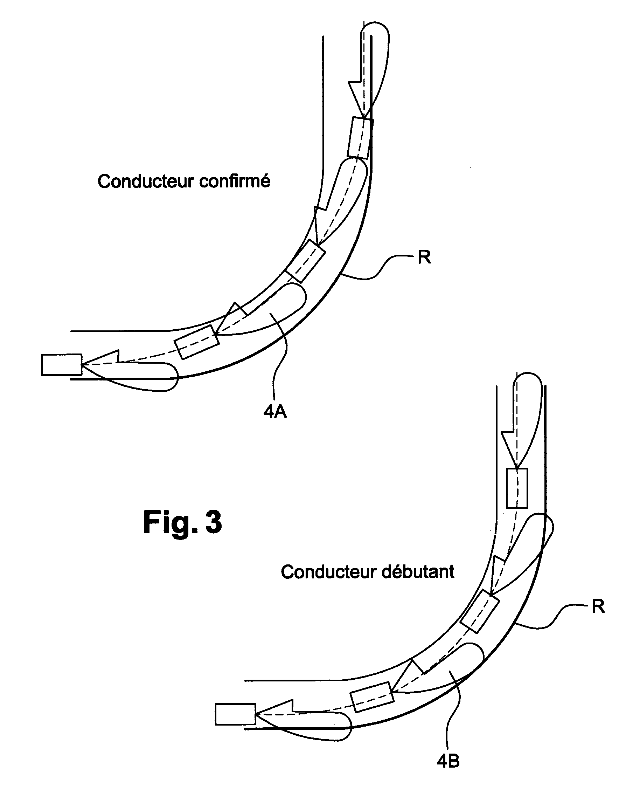

Pour illustrer cette loi de commande et ce pivotement du faisceau lumineux du projecteur 4 en fonction du mode de conduite, on se réfère à la figure 3.

Sur la figure de gauche, est représentée la trajectoire sur une route R et l'orientation du faisceau lumineux 4A du projecteur 4 dans le cas d'un mode de conduite classé conducteur confirmé. Sur la figure de droite, est représentée la trajectoire et l'orientation du faisceau lumineux 4B du projecteur 4 dans le cas d'un mode de conduite classé conducteur débutant.

Le mode de réalisation décrit ci-dessus est un mode de réalisation préféré, mais l'invention englobe d'autres variantes.

Si la boîte de vitesse du véhicule automobile n'est pas du type précédemment décrit, il peut être associé à la boîte de vitesses un calculateur d'analyse de paramètres de conduite et un dispositif de comparaison de ces paramètres avec des paramètres prédéfinis déterminant un mode de conduite, de façon liée mais non intégrée.

Au lieu d'utiliser la boîte de vitesses du véhicule, le calculateur d'analyse de paramètres de conduite peut être lié à un capteur sur la pédale d'accélération du véhicule.

L'étape d'analyse peut alors consister en une analyse d'au moins un paramètre du déplacement de la pédale d'accélération du véhicule qui peut être la valeur d'enfoncement de cette pédale et/ou la vitesse d'enfoncement de cette pédale. Ces paramètres sont alors pris en compte par un logiciel de logique floue pour déterminer le mode de conduite.

De façon plus générale, d'autres paramètres de conduite peuvent être utilisés. A titre d'exemples, on peut utiliser l'accélération latérale, la vitesse et l'accélération, l'utilisation de l'accélérateur et du frein, les changements de rapports de vitesses et le temps mis pour ces changements, la vitesse et l'accélération des mouvements de rotation du volant. Cependant, ces exemples de paramètres engendrent une augmentation de la complexité de l'acquisition et de traitement des données, par rapport au mode de réalisation préféré décrit en détail plus haut.

## Revendications

1. Procédé de commande d'au moins un faisceau lumineux émis par un dispositif d'éclairage d'un véhicule sur une route, en fonction de la géométrie de cette route, **caractérisé en ce qu'**il comporte les étapes suivantes :
- acquisition de données représentatives d'au moins un paramètre de conduite ;
- analyse desdites données afin de déterminer un mode de conduite associé à un comportement du conducteur du véhicule ; et
- choix d'une loi de commande des faisceaux lumineux en fonction du mode de conduite déterminé.

2. Procédé selon la revendication 1, **caractérisé en ce que** l'étape d'analyse est déclenchée automatiquement au démarrage du véhicule.

3. Procédé selon l'une des revendications précédentes, **caractérisé en ce que** ledit paramètre de conduite est choisi parmi au moins un des paramètres suivants : un paramètre de la boîte de vitesses du véhicule et/ou un paramètre du déplacement de la pédale d'accélération et/ou un paramètre du déplacement de la pédale de freinage du véhicule.

4. Procédé selon la revendication 3, **caractérisé en ce que** ledit paramètre de la boîte de vitesses est le changement de rapport de vitesse et/ou le temps mis pour ces changements.

5. Procédé selon la revendication 3, **caractérisé en ce que** ledit paramètre du déplacement de la pédale d'accélération et/ou de la pédale de freinage du véhicule est la valeur d'enfoncement de la (les) pédale(s) et/ou la vitesse d'enfoncement de la (des) pédale(s).

6. Procédé selon l'une des revendications précédentes, **caractérisé en ce que** la commande du dispositif d'éclairage est une modification de l'un au moins des faisceaux lumineux du dispositif d'éclairage, notamment une modification d'orientation d'au moins un faisceau et/ou un allumage/extinction d'un faisceau spécifique et/ou une modification de l'intensité lumineuse d'au moins un faisceau.

7. Système de commande des faisceaux lumineux émis par un dispositif d'éclairage d'un véhicule (4) circulant sur une route (R), en fonction de la géométrie de cette route, pour la mise en oeuvre du procédé selon l'une des revendications précédentes, **caractérisé en ce qu'**il comporte :
- un dispositif d'acquisition (5A) de données représentatives d'au moins un paramètre de conduite,
- un calculateur d'analyse (5A) desdites données représentatives dudit au moins un paramètre de conduite,
- un dispositif de comparaison (5A) dudit au moins un paramètre de conduite avec des paramètres prédéfinis déterminant des modes de conduite afin de déterminer un mode de conduite associé à un comportement du conducteur du véhicule, et
- un dispositif de commande (6) des faisceaux lumineux selon une loi de commande des faisceaux lumineux en fonction du mode de conduite déterminé.

8. Système selon la revendication 7, **caractérisé en ce que** lesdits dispositif d'acquisition et calculateur d'analyse sont liés à la boîte de vitesses (5) du véhicule et/ou à un capteur sur la pédale d'accélération et/ou de freinage du véhicule.

9. Système selon la revendication 7 ou 8, **caractérisé en ce que** lesdits dispositif d'acquisition et calculateur d'analyse, ainsi que ledit dispositif de comparaison (5A), sont intégrés à la boîte de vitesses automatique (5) du véhicule.

10. Dispositif d'éclairage de véhicule automobile utilisant un système de commande conforme à l'une des revendications 7 à 9 ou un procédé de commande selon l'une des revendications 1 à 6.

11. Véhicule automobile équipé d'au moins un dispositif d'éclairage selon la revendication 10.
